(19) Europäisches Patentamt

European Patent Office

Office européen des brevets

(11) **EP 1 235 391 A1**

(12) **DEMANDE DE BREVET EUROPEEN**

(43) Date de publication:
**28.08.2002 Bulletin 2002/35**

(51) Int Cl.⁷: $H04L\ 12/56$

(21) Numéro de dépôt: **01403317.9**

(22) Date de dépôt: **20.12.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **22.12.2000 FR 0016929**

(71) Demandeur: **COMMISSARIAT A L'ENERGIE ATOMIQUE**
**75752 Paris Cédex 15 (FR)**

(72) Inventeurs:
• **Derou-Madeline, Dominique**
**38240 Meylan (FR)**
• **Herault, Laurent**
**38640 Claix (FR)**

(74) Mandataire: **Poulin, Gérard**
**Société BREVATOME**
**3, rue du Docteur Lancereaux**
**75008 Paris (FR)**

(54) **Procédé de routage adaptif par déflexion avec apprentissage par renforcement**

(57) L'invention concerne un procédé de gestion d'un réseau de routeurs, basé sur la technique d'apprentissage par renforcement, dans lequel la priorité est donnée aux objets déjà présents dans le réseau, sur ceux qui demandent à y entrer.

FIG. 3A

FIG. 3B

**Description**

Domaine de l'invention

L'invention concerne un procédé de routage adaptatif par déflexion d'objets circulant dans un réseau de routeurs, dans lequel les objets déjà présents dans le réseau sont prioritaires sur les objets qui demandent à y entrer.
L'invention s'applique aux réseaux de routeurs dans lesquels circulent des objets à acheminer à une destination, fixée à l'avance, via un chemin optimum. En particulier, l'invention peut s'appliquer aux réseaux de télécommunications pour le transfert de paquets d'informations. Elle peut aussi s'appliquer à des réseaux de logistiques pour le routage de colis ou de lettres sur des chaînes de tris, dans des entreprises de transport.
L'invention peut également s'appliquer aux réseaux routiers pour aider au déplacement de véhicules, en évitant au mieux les zones encombrées, afin de faire transiter les véhicules d'un point à un autre le plus rapidement possible, tout en évitant les chocs avec d'autres véhicules.

Etat de la technique

Il existe actuellement plusieurs types de procédés de gestion d'un réseau de routeurs, appelés aussi « procédés de routage ».
L'un de ces procédés est le procédé du Q-LEARNING, qui est décrit notamment dans l'article de T. JAAKKOLA, M. JORDAN et S. SINGH, intitulé « Convergence of stochastic iterative dynamic programming algorithms », in Advances in Neural Information Processing Systems, volume 6, pages 703 - 710, 1993, et dans l'article de C. WATKINS and P. DAYAN, intitulé « Technical note on Q-Learning », Machine Learning, 8(3), pages 279 - 292, 1992.
Une méthode de Q-LEARNING utilisant une méthode d'apprentissage par renforcement est décrite dans l'article de J. BOYAN and M. LITTMAN, « Packet routing in dynamically changing networks : a reinforcement learning approach », dans Advances in Neural Information Processing Systems, volume 6, pages 671 - 678, 1993. Cet article explique le problème que l'on cherche à résoudre : lorsqu'un objet P arrive sur un routeur x avec, comme destination finale, le routeur d, alors le routeur x doit décider, à partir d'informations locales qui lui sont propres, vers lequel de ses voisins routeurs y, il doit aiguiller l'objet P, afin que ce dernier arrive dans les meilleurs délais à sa destination finale. Dans ce document, J. BOYAN et M. LITTMAN proposent de résoudre le problème en estimant le temps nécessaire à l'objet P pour aller du routeur x au routeur d, en utilisant une méthode d'apprentissage par renforcement.
Dans cette méthode, tous les objets arrivent soit en provenance de la file d'attente externe, soit des liens internes du réseau, dans une file tampon, qui permet de temporiser les objets avant leur routage, via le routeur. Il est donc nécessaire de prendre en compte, dans l'équation de mise à jour des valeurs Q, la longueur de la file d'attente externe du routeur courant x. Ainsi, les valeurs $Q_x(d,y)$ fournissent une indication de l'estimation du temps nécessaire à l'objet pour atteindre sa destination d, à partir de x, en étant routé sur y. Les valeurs Q tiennent compte du temps de trajet restant à parcourir et de l'encombrement du routeur voisin, ce temps étant indicatif du temps nécessaire aux objets présents dans la file d'attente externe de y pour rentrer dans le réseau et, donc, indicatif du temps d'attente, engendré pour l'objet en x, non prioritaire sur les objets de la file d'attente externe, du voisin y.
Avec une telle méthode, il n'est pas possible de donner la priorité systématiquement aux objets présents dans le réseau, puisque tout objet entré dans le réseau est prioritaire. En effet, dans cette méthode, et dans le cas où la priorité serait donnée aux objets présents dans le réseau, l'encombrement des files d'attente externes des routeurs n'influe pas sur le temps de trajet d'un objet circulant à l'intérieur du réseau et ne permet pas d'estimer le retard induit par la charge des voisins des routeurs.
Cette méthode ne peut donc pas résoudre les problèmes de routage des objets dans un réseau, dans lequel on donne la priorité aux objets déjà présents dans le réseau.
Ce procédé du Q-LEARNING associé à une méthode d'apprentissage par renforcement, est appelée « méthode du Q-ROUTING ». Cette méthode présente l'avantage d'être très efficace et de permettre d'obtenir une solution proche de celle fournie par l'algorithme classique du « chemin le plus court », lorsqu'il y a une faible charge de trafic sur le réseau. Lorsque la charge de trafic augmente, cette méthode reste très efficace, bien qu'elle nécessite une courte période d'adaptation. De plus, cette méthode du Q-ROUTING adapte sa stratégie de routage à des modifications occasionnelles de la topologie du réseau.
Ces avantages sont obtenus par le fait que les décisions de routage sont prises localement et que les valeurs qui, seules, permettent la prise de décision de routage, sont réunies dans une table unique, cette table contenant à la fois les informations de charge du trafic du réseau et les informations d'adresses physiques des routeurs.
Cependant, ce procédé présente l'inconvénient suivant : le système doit apprendre un chemin optimal avec une charge stationnaire ; dès que la charge change, un nouvel apprentissage est nécessaire et celui-ci est très lent. De plus, lorsque la charge de trafic diminue, le procédé de Q-ROUTING n'a pas la capacité de renconverger rapidement vers l'efficacité initiale (c'est-à-dire le plus court chemin), du fait que, seules, les données concernant les routeurs visités sont mises à jour. Il y a ainsi un effet d'hystérésis dans l'apprentissage des tables de routage.

Cette inertie d'adaptation aux variations de trafic est très gênante, en pratique, car elle empêche toute absorption de la sporadicité, incontournable dans la plupart des applications.

Pour éviter cet effet d'hystérésis, un procédé a été décrit dans l'article de S. CHOI and D. YEUNG, intitulé « Predictive Q-routing : a memory-based reinforcement learning approach to adaptive traffic control », submitted to Neural Information Processing Systems. Ce document propose d'utiliser un trafic de sondes ; pour cela, des objets « sondes » sont envoyés vers des routeurs dont les valeurs Q sont très élevées et non modifiées depuis longtemps, afin de mettre à jour les valeurs Q correspondantes. Pour cela, ce document propose de prédire, au moyen d'une extrapolation linéaire, quelles sont les corrections à apporter aux valeurs Q, avant de les évaluer, pour trouver la meilleure affectation des objets sur les sorties. Cependant, cette méthode nécessite l'utilisation de quatre tables, au niveau de chaque routeur, ce qui augmente considérablement les temps de traitement.

Une autre méthode pour éviter l'effet d'hystérésis, pourrait consister à utiliser du bruit thermodynamique dans le mécanisme de choix de l'affectation $\psi$, afin de garantir une bonne exploration de l'espace des états. Cette méthode est bonne lorsque le taux de charge est homogène. Cependant, comme l'apprentissage doit être continuel dans l'environnement instationnaire du réseau, il apparaît difficile de contrôler une loi de descente de pseudo-température.

Exposé de l'invention

L'invention a justement pour but de remédier aux inconvénients des procédés de routage décrits précédemment.

A cette fin, elle propose un procédé de gestion d'un réseau de routeurs, basé sur la technique d'apprentissage par renforcement, dans lequel la priorité est donnée aux objets déjà présents dans le réseau, sur ceux qui demandent à y entrer.

Plus précisément, l'invention concerne un procédé de routage adaptatif d'objets dans un réseau numérique comportant une pluralité de routeurs reliés entre eux par des liens, chaque routeur comportant :

- M liens entrants et M liens sortants ;
- une file d'attente interne ;
- une file d'attente externe ;
- un buffer de routage de taille M ; et
- un module de traitement ;

chaque routeur étant associé à une table de routage comportant des valeurs relatives à l'estimation du nombre de déflexions subies par chaque objet au départ de ce routeur, pour une destination donnée,

ledit procédé comprenant une première étape d'initialisation de la table de valeurs associée à chaque routeur, puis une étape de traitement récurrent de chaque lien du réseau consistant à :

a) détecter si au moins un objet est arrivé sur au moins un routeur ;
b) considérer chaque lien du réseau et regarder s'il y a au moins un objet sur ces liens ;

- si oui, déplacer les objets le long des liens d'une unité de temps ;
- si non, attendre une unité de temps ;

c) considérer chaque routeur du réseau et pour chacun détecter l'état de ses liens entrants ;

- si la présence d'un objet est détectée sur un lien entrant et que la destination de cet objet est le routeur considéré, alors ledit objet étant arrivé à destination, il est sorti du réseau ;
- si aucun objet à destination de ce routeur n'est détecté sur les liens entrants, alors vérifier l'état de la file d'attente interne :

  . si la file d'attente contient des objets, alors transférer ces objets dans le buffer du routeur ;
  . si ledit buffer n'est pas plein, alors vérifier si des objets sont en attente dans la file d'attente externe et remplir le buffer avec une partie au moins des objets en attente dans cette file d'attente externe,

caractérisé en ce qu'il consiste à :
d) affecter le contenu du buffer de routage sur les liens sortants du routeur en fonction de la table de routage associée et estimer dynamiquement le nombre de déflexions que les objets subiront en aval du routeur pour atteindre leur destination ;

e) mettre à jour les valeurs de la table de routage associée pour estimer le nombre de déflexions subies, sur tout le trajet, par les objets.

Avantageusement, à l'arrivée d'un objet, chaque routeur envoie au routeur précédent un accusé de réception indiquant le nombre de déflexions estimées, subies par l'objet pour aller jusqu'au routeur de destination.

Selon un mode de réalisation de l'invention, les étapes c) à e) sont effectuées successivement pour chaque routeur.

Selon un autre mode de réalisation de l'invention, les étapes c) à e) sont effectuées pour chaque routeur simultanément.

L'étape c) du procédé de l'invention peut consister à prendre en compte les informations contenues dans les accusés de réception envoyés par tous les routeurs voisins, pour la mise à jour des tables de routage.

Brève description des figures

- La figure 1 représente schématiquement un exemple de réseau de routeurs, reliés par des liens bidirectionnels ;
- la figure 2 représente le diagramme fonctionnel d'un routeur du réseau de la figure 1 ;
- les figures 3A, 3B, etc., représentent l'organigramme général du procédé de l'invention.

Description détaillée de modes de réalisation de l'invention

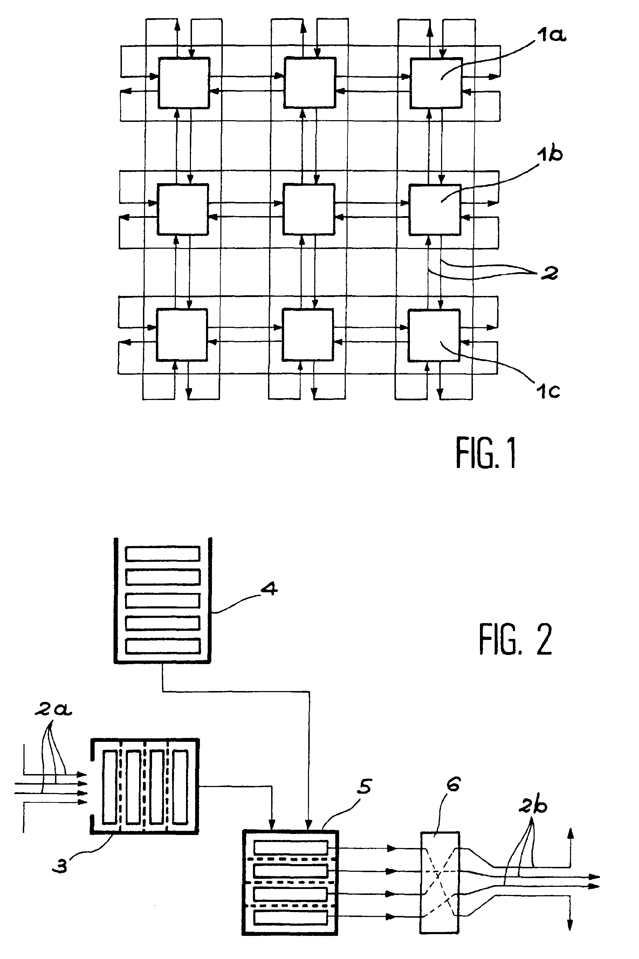

Sur la figure 1, on a représenté schématiquement un exemple de réseau de routage comportant plusieurs routeurs reliés les uns aux autres par des liens bidirectionnels. Dans cet exemple, le réseau comporte 3 X 3 routeurs.

Sur cette figure 1, on a référencé la, 1b, 1c, etc., les différents routeurs du réseau et on a représenté, par des flèches, les liens entrants et sortants qui relient les routeurs deux-à-deux. La référence 2 représente ces liens bidirectionnels entre deux routeurs.

Ces liens assurent la circulation des objets entre les routeurs. Ces objets sont caractérisés chacun par leur destination. Chaque objet transite dans le réseau, par un ou plusieurs routeurs, jusqu'à ce qu'il atteigne sa destination. Pour se faire, les objets entrent dans le réseau par un routeur d'entrée, cheminent dans le réseau de routeur en routeur, le long des liens et sortent du réseau par le routeur correspondant à leur destination.

Chaque routeur a des liens entrants et des liens sortants. Le rôle des routeurs est de « router » les objets en transit, c'est-à-dire de déterminer une affectation pour les objets qui se présentent à leur entrée et de les faire sortir par une de leur sortie. Pour cela, chaque routeur comporte ses propres moyens de décision. Il peut ainsi être chargé de diriger les objets qui lui arrivent, en fonction des destinations demandées pour ces objets, en optimisant la qualité de service et en gérant au mieux les éventuels conflits.

Sur la figure 2, on a représenté schématiquement le fonctionnement d'un routeur du réseau de routeurs, représenté sur la figure 1.

Comme on le voit sur cette figure, chaque routeur comporte des liens entrants, référencés 2a, et des liens sortants, référencés 2b. Les liens entrants 2a sont les liens qui proviennent d'un routeur voisin. Les objets transmis par ces liens entrants 2a sont placés dans une file d'attente interne, référencée 3, c'est-à-dire une file d'attente qui contient uniquement des objets provenant d'autres routeurs du réseau. Parallèlement à cette file d'attente interne 3, le routeur comporte une file d'attente externe 4, dans laquelle sont placés les objets demandant à entrer dans le réseau.

Ces deux files d'attente 3 et 4, de tailles limitées, sont connectées à un buffer de routage 5, dans lequel sont introduits les prochains objets à diriger dans le réseau, vers d'autres routeurs. Comme on le verra plus précisément par la suite, ce buffer de routage, de taille limitée M, est rempli en priorité par les objets contenus dans la file d'attente interne 3 et, lorsqu'il reste de la place, par les objets présents dans la file d'attente externe 4.

Des moyens de décision 6, propres à chaque routeur, assurent la décision d'affectation de chaque objet contenu dans le buffer de routage 5. Ils affectent les objets présents dans le buffer de routage sur les liens sortants du routeur. Autrement dit, ce sont ces moyens de décision 6 qui déterminent si l'objet présent dans le buffer de routage est arrivé à destination, ou bien s'il doit être dirigé vers un autre routeur du réseau, afin d'arriver à sa destination.

Les liens sortants 2b sont connectés à ces moyens de décision 6. Ces liens sortants 2b contiennent donc les objets dont la destination n'était pas le routeur considéré, mais un autre routeur du réseau, le routeur considéré ayant dirigé ces objets vers d'autres routeurs voisins.

Le réseau de routage, qui vient d'être décrit, a donc pour but d'acheminer le trafic d'objets de leur source à leur destination, en garantissant une qualité de service. En fonction de l'application, cette qualité de service peut être simplement la rapidité ou bien un choix de cheminement particulier, par exemple pour éviter les chocs dans l'application au trafic routier.

Dans le réseau, qui vient d'être décrit, le routage est « distribué », c'est-à-dire que la décision de routage n'est pas centralisée, mais au contraire distribuée dans chaque routeur du réseau. Ainsi, chaque routeur du réseau est équipé de moyens de décision autonomes (référencé 6), qui lui permettent, à un instant donné, de considérer tous les objets qu'il a à transmettre et d'adapter sa décision de routage à chaque objet, en fonction de son environnement.

Ce réseau de routage agit par déflexions, une déflexion étant l'écart entre le chemin suivi réellement par l'objet et le chemin théorique prévu initialement, sans tenir compte du trafic. Autrement dit, ce mode de routage consiste à répartir très rapidement, sur les liens de sortie, les objets arrivant à un instant donné sur les liens entrant du routeur. Ainsi, quand deux objets arrivent sur le même routeur, et que ces objets désirent prendre la même sortie, l'un des objets prend cette sortie et l'autre objet est défléchi, c'est-à-dire qu'il est envoyé sur un autre lien qui n'avait pas sa préférence. Ce concept permet de fournir un mode de règlement rapide des conflits à l'intérieur du routeur.

Chaque routeur du réseau est associé à une table de valeur qui contient les estimations du nombre de déflexions nécessaires pour aller du routeur considéré, à tout autre routeur du réseau, par les M sorties du routeur considéré. Plus précisément, dans le cas où le critère de qualité est la durée de transit, la table de valeurs contient toutes les informations d'estimations du temps requis pour aller du routeur considéré à un autre routeur du réseau, par l'une des M sorties de ce routeur.

Les tables de valeurs des routeurs sont mises à jour, grâce à des accusés de réception envoyés chacun par le routeur considéré au routeur précédent, via le lien qui relie ces deux routeurs. Ces accusés de réception indiquent le nombre estimé de déflexions subies par l'objet pour aller du routeur considéré au routeur de destination.

Autrement dit, la table de valeurs du routeur x contient les estimations du nombre de déflexions nécessaires pour aller de ce routeur à tous les autres routeurs du réseau par les M sorties du routeur x. Dans le cas où le critère de qualité est la durée de trajet, cette table contient toutes les informations d'estimation du temps requis pour aller de x à tout autre routeur du réseau, par l'une des sorties M de x.

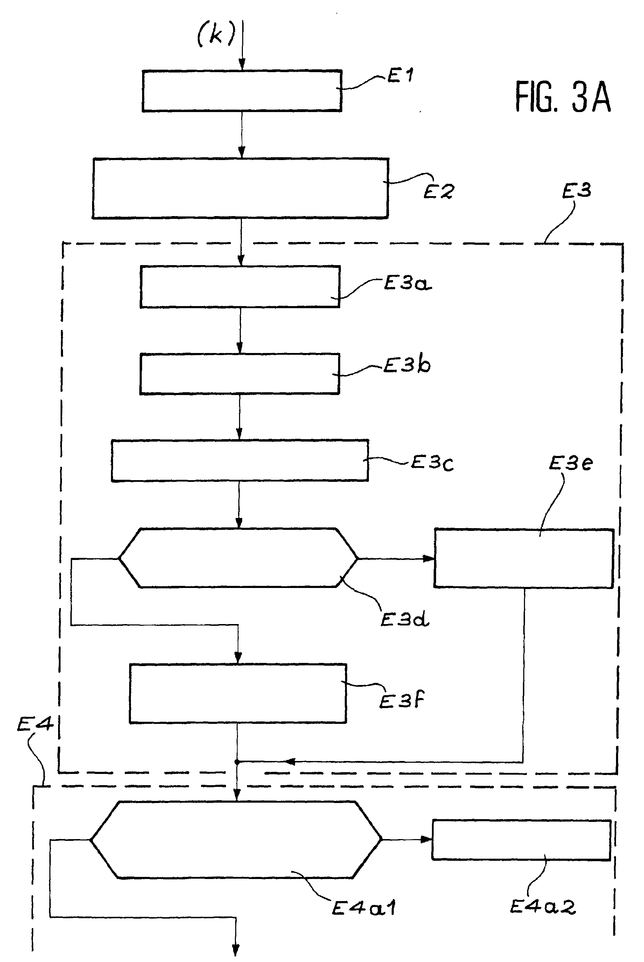

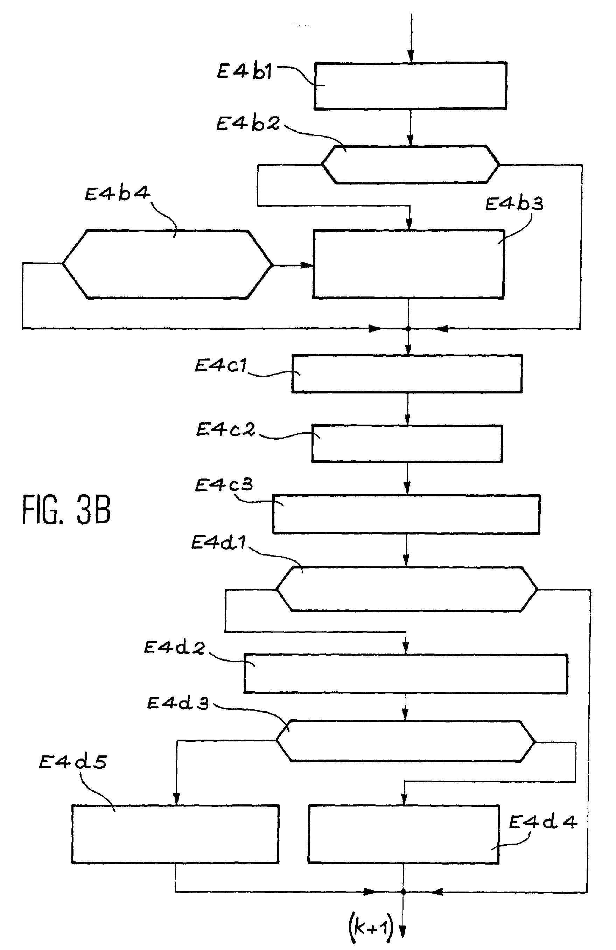

Sur la figure 3, on a représenté, de façon schématique, l'organigramme montrant les différentes étapes du procédé de l'invention.

La première étape, référencée E1, est une étape d'initialisation. Dans cette étape, toutes les variables, utilisées dans le procédé de l'invention, sont initialisées. Ainsi :

- $\psi$ est une configuration d'affectation. Si N objets sont à router, la configuration d'affectation $\psi$ est composée de N affectations $y_i(\psi)$ ;
- $S_x(d,y)$ est une distance entre x et d en sortant par le routeur y ;
- $S_x(d_i, y_i(\psi))$ est une distance entre x et $d_i$ en sortant par le routeur $y_i(\psi)$ ;
- $P_{transit} = \{P_i(S_i, d_i)\}$ est l'ensemble des objets en transit : chaque objet $P_i$ vient du routeur voisin $s_i$ et a la destination $d_i$ ;
- $\eta \in [0,1[$ est le taux d'apprentissage ;
- $\gamma \in [0,1[$ est le taux d'oubli ;
- $Q_x(d_i, y)$ est une estimation du nombre de déflexions subies par les objets allant de x à $d_i$, en sortant de x par y. Le nombre de déflexions est calculé par rapport à la sortie au plus court chemin topologique.

En particulier, la table $Q_x$ du routeur x est initialisée de la façon suivante :

$$Q_x^{t\,=\,0}(d,y) = 0 \text{ si } S_x(d,y) = \min_{y' \text{ voisin de } x}(S_x(d,y'))$$

$$(1)$$

$$Q_x^{t\,=\,0}(d,y) = 1 \text{ sinon}$$

Le procédé de l'invention se poursuit par une succession d'itérations (étapes E2 à E4), chaque itération correspondant à l'arrivée de nouveaux objets dans les files d'attente extérieures et au déclenchement de tous les routeurs du réseau, afin d'admettre d'éventuels objets provenant de l'extérieur et de router les objets provenant des routeurs voisins.

L'organigramme de la figure 3 représente le procédé de l'invention pour l'itération k. Lorsque toutes les étapes de l'organigramme ont été effectuées pour cette itération k, le procédé est répété pour l'itération k + 1.

Le nombre T d'itérations n'est limité que par le temps CPU, que l'on souhaite accorder au procédé, T étant toutefois suffisant pour rendre compte du comportement du réseau.

Chaque itération, dans le procédé de l'invention, comporte deux étapes :

- l'étape E2, qui correspond à l'arrivée de nouveaux objets sur certains routeurs, ou sur l'ensemble des routeurs du réseau ; et
- l'étape E3, qui correspondant au parcours de tous les liens du réseau et au déplacement des objets le long de ces liens.

Plus précisément, dans l'étape E2, de nouveaux objets arrivent sur certains routeurs du réseau, afin de transiter à travers le réseau. Ces nouveaux objets sont caractérisés par leur destination, c'est-à-dire par l'adresse de leur routeur de destination. Chaque nouvel objet est placé en queue de la file d'attente externe du routeur devant lequel il se présente.

L'étape E3 consiste à traiter les objets présents dans les liens du réseau. Plus précisément, cette étape E3 consiste, tout d'abord, à traiter séquentiellement tous les liens du réseau (sous-étape E3a). Elle consiste ensuite, dans une sous-étape E3b, à traiter séquentiellement tous les objets contenus dans chaque lien. Tout objet présent sur le lien considéré est alors avancé d'une case le long du lien (sous-étape E3c), chaque « case » correspondant au déplacement d'un objet sur un lieu pendant une unité de temps.

L'étape E3 consiste ensuite à vérifier, dans une sous-étape E3d, si le déplacement implique que l'objet arrive sur un routeur ; si c'est le cas, alors l'objet est placé dans une file d'attente interne du routeur (étape E3f). Si ce n'est pas le cas, alors la nouvelle position de l'objet sur le lien est enregistrée (étape E3e) et sera prise en compte pendant l'étape E3, à la prochaine itération.

Le procédé de l'invention se poursuit par une étape E4, qui consiste à parcourir, dans un ordre séquentiel aléatoire, tous les routeurs du réseau et à réaliser, sur chacun de ces routeurs, un certain nombre d'opérations. Ces opérations peuvent être réalisées sur tous les routeurs simultanément ou bien sur chaque routeur successivement.

L'étape E4 se divise en sous-étapes E4a à E4d. L'étape E4a consiste, avant de procéder à l'admission de nouveaux objets dans la file d'attente interne, à étudier la liste des objets présents dans cette file d'attente interne et, en particulier, leurs destinations. Les objets présents dans cette file d'attente interne qui sont arrivés à destination (dans ce cas, leur destination est le routeur considéré) sont délivrés et retirés du réseau.

Plus précisément, cette étape E4a consiste en un test E4a1, qui vérifie si les objets contenus dans la file d'attente interne ont pour destination l'adresse du routeur considéré. Si c'est le cas, alors ces objets sont livrés lors de l'étape E4a2. Si ce n'est pas le cas, alors on passe à l'étape E4b, qui remplit le buffer de routage.

Cette étape E4b comporte, tout d'abord, une étape E4b1, qui consiste à transférer les objets contenus dans la file d'attente interne, et non délivrés (c'est-à-dire qui ne sont pas arrivés à destination), dans le buffer de routage. Bien sûr, ce sont les objets les plus anciens contenus dans la file d'attente qui sont transférés en premier dans le buffer de routage. S'il n'y a pas suffisamment de place dans le buffer de routage, seule une partie des objets contenus dans cette file d'attente interne est transférée dans le buffer de routage.

Un test E4b2 consiste ensuite à vérifier si le nombre d'objets BR dans le buffer de routage est bien inférieur à M, c'est-à-dire au nombre de places disponibles dans le buffer. Si c'est le cas, alors le procédé de l'invention consiste à regarder dans la file d'attente externe (test E4b4) s'il y a des objets présents. Si c'est le cas, alors les objets présents sur la file d'attente externe sont introduits dans le buffer de routage, de façon à remplir le buffer de routage. Autrement dit, pour un buffer de routage de taille M, s'il y a BR objets déjà placés dans le buffer (objets provenant de la file d'attente interne), alors il est possible d'introduire, dans le buffer, M - BR, objets provenant de la file d'attente externe. Par contre, si à l'étape E4b2, il s'avère que le buffer de routage est déjà entièrement rempli par les objets qui proviennent de la file d'attente interne, alors aucun objet provenant de file d'attente externe n'est introduit dans le buffer de routage.

En effet, dans ce mode de routage, le routeur peut router au maximum M objets, simultanément, soit un objet par sortie.

Ce procédé donne ainsi la priorité aux objets en transit, c'est-à-dire aux objets déjà présents dans le réseau de routeurs. Les nouveaux objets ne peuvent entrer dans le réseau que s'il y a de la place disponible. Ce procédé garantit qu'un objet ne peut être « tué » dans le réseau, c'est-à-dire retiré du réseau tant que son routage n'est pas terminé.

Le procédé de l'invention se poursuit par l'étape E4c de routage, proprement dit, des objets, cette étape de routage étant la détermination, pour tous les objets présents dans le buffer de routage, du routeur de destination et de la sortie sur laquelle on affecte l'objet.

Dans le procédé de l'invention, chaque routeur a une stratégie globale lui permettant d'estimer grossièrement la trajectoire des objets qu'il doit router, afin qu'ils atteignent leur destination en évitant les régions denses du réseau, ce qui a priori minimise les risques de collision, et en évitant aussi de s'engager dans les régions bouchées. Dans ce procédé, le routeur a également une stratégie locale lui permettant de déterminer une affectation admissible, c'est-à-dire de ne pas donner la même sortie à deux objets différents.

Ainsi, au niveau d'un routeur, la stratégie consiste à viser, pour chaque objet à router, le chemin optimal, s'il est disponible, ou un chemin sous-optimal, en donnant la priorité à l'évitement des collisions, par le moyen des déflexions.

Le principe de routage par déflexion consiste à répartir les objets de la file d'attente interne sur les M sorties du routeur, en fonction des destinations désirées par les objets. En d'autres termes, le procédé consiste à trouver une configuration d'affectation des objets présents dans la file d'attente interne, optimale au sens des critères choisis.

Le procédé de l'invention propose d'utiliser des indicateurs internes au trafic du réseau. L'indicateur interne choisi est l'estimation dynamique du nombre de déflexions que les objets devront subir, en aval du routeur considéré, pour atteindre leur destination. Ainsi, les objets seront routés, de manière à minimiser le nombre global de déflexions qu'ils auront à subir.

Une fois l'affectation déterminée, les objets sont transférés instantanément sur les sorties du routeur.

L'étape E4c du procédé de l'invention consiste, d'abord, à sélectionner la meilleure configuration d'affectation dynamique (étape E4c1), par exemple celle qui minimise le temps de trajet estimé. Elle consiste, ensuite, à router des objets en appliquant cette configuration optimale (étape E4c2). Enfin, l'étape E4c3 consiste à envoyer des accusés de réception aux routeurs précédents pour les informer que les objets ont bien été routés. En d'autres termes, si $n$ objets $P_i(s_i,d_i)$ doivent être routés en un routeur $x$, alors il faut :

- sélectionner la meilleure configuration d'affectation dynamique $\tilde{\psi}$ :

$$\tilde{\psi} = \arg\min_{\psi} \sum_{i=1}^{n} (S_x(d_i, y_i(\psi)) + 2.Q_x(d_i, y_i(\psi))) \qquad (Eq.\ 1)$$

- router les objets suivants la configuration optimale $\tilde{\psi}$, i. e. affecter à chaque objet $P_i$ la sortie $y_i(\tilde{\psi})$ ;
- envoyer au routeur d'origine $s_i$ de l'objet $P_i(s_i,d_i) \in P_{transit}$ un accusé de réception :

$$t_x(d_i) = Q_x(d_i, y_i(\tilde{\psi})) \qquad (Eq.\ 2)$$

où $y_i(\tilde{\psi})$ désigne la sortie effectivement empruntée par l'objet $P_i(s_i,d_i)$.

En effet, le routage se fait sur la base de la valeur $S_x(d_i,y_i(\tilde{\psi})) + 2.Q_x(d_i,y_i(\tilde{\psi}))$, dans laquelle $S_x(d_i,y_i(\tilde{\psi}))$ représente la distance du plus court chemin pour que l'objet $i$ aille de $x$ à sa destination $d_i$, en empruntant la voie $y_i(\tilde{\psi})$. Comme $Q_x(d_i,y_i(\tilde{\psi}))$ désigne le nombre de déflexions estimé sur le trajet le plus suivi pour aller de $x$ à $d_i$, en passant par $y_i(\tilde{\psi})$ lors des dernières itérations, la variable $S_x(d_i,y_i(\tilde{\psi}))$ représente l'estimation du nombre de routeurs que l'objet $i$ traversera sur son trajet, en sortant par $y_i(\tilde{\psi})$. Puisque tous les liens sont, par hypothèse, de la même longueur, cette valeur est directement proportionnelle au temps de transit. En conséquence, le routage se fait par l'optimisation du temps de transit des objets, ce temps étant estimé dynamiquement à l'aide d'un indicateur interne (par exemple, le nombre de déflexions subies).

Le procédé de l'invention se poursuit par l'étape E4d, qui consiste à mettre à jour la table des valeurs de routage. La mise à jour de la table des valeurs de routage se fait de la façon suivante :

A chaque routeur $x$, est associée une table $T_x$, qui lui est propre :

$$T_x = \{Q_x(d,z)/z \in \nu(x), d : \text{routeur du réseau}\}$$

avec

- $\nu(x)$ : ensemble des routeurs voisins de $x$ ;
- $Q_x(d,z)$ : une valeur associée au triplet (routeur $x$, destination $d$, sortie $z$).

Plus précisément, l'étape E4d comporte un test E4d1 destiné à vérifier si un accusé de réception a été reçu par le routeur $x$, en provenance d'un routeur voisin $y_i$, pour la destination $d_i$. Si c'est le cas, alors, pour tous les routeurs $y$ voisins de $x$ (étape E4d2), on vérifie, dans une étape E4d3, si $y$ est la sortie correspondant au routeur d'où provient l'accusé de réception. Si c'est le cas, alors la table des valeurs Q est mise à jour selon le mode « apprentissage » (étape E4d4). Si ce n'est pas le cas, alors la table des valeurs est mise à jour selon le mode « désapprentissage » (étape E4d5). Par contre, si aucun accusé de réception n'a été reçu par le routeur x, à l'étape E4d1, alors on passe directement à la fin du procédé, pour l'itération k.

Cette étape E4d peut s'écrire de la façon suivante :

Pour tout y appartenant au voisinage de x :

- si y = $y_i$, i. e. y est la sortie correspondant au routeur d'où provient l'accusé de réception, alors :

$$Q_x(d_i,y) := (1 - \eta) .Q_x(d_i,y) + \eta(q_x(d_i,y) + t_y(d_i)) \qquad \text{(Eq. 3)}$$

où $q_x(d_i,y) = 1$, si y n'appartient pas à un des plus courts chemins topologiques entre x et $d_i$(déflexion) et $q_x(d_i,y) = 0$ sinon.

Sinon :

$$Q_x(d_i,y) := \gamma.Q_x(d_i,y)+(1 - \gamma) .Q_x^{t=0} (d_i,y \qquad \text{(Eq. 4)}$$

Cette estimation dynamique est donc réalisée en prenant en compte le fait que, lors de la mise à jour de la table de routage, le routage a défléchi ou non l'objet. La mise à jour de la table de routage utilise l'information de l'affectation choisie pour les précédents objets, déjà passés par le routeur x considéré. On obtient ainsi une information sur l'encombrement du réseau.

Le procédé de mise à jour des valeurs de $Q_x$, selon le mode « apprentissage », est le suivant.

$$Q_x(d_i,y) := (1 - \eta) .Q_x(d_i, y) + \eta. (q_x(d_i, y) + t_y(d_i))$$

dans laquelle :

- $q_x(d_i,y) = 1$, si y n'appartient pas à un des plus courts chemins topologiques entre x et $d_i$ (i. e. s'il y a déflexion) et $q_x(d_i,y) = 0$, sinon ;
- $t_x(d_i) = Q_x(d_i,y_i(\tilde{\psi}))$ et $y_i(\tilde{\psi})$ désigne la sortie attribuée à l'objet P*i* par l'affectation $\tilde{\psi}$ .

Dans l'équation (Eq. 3), le coût immédiat de l'action décidée par la procédure de routage est égal à $q_x(d_i,y)$, qui vaut 1 (pénalisation) si le routage impose une déflexion à l'objet routé et qui vaut 0, sinon (non pénalisante).

Grâce à cette expression, en régime stationnaire, le système va dynamiquement apprendre une valeur $Q_x$ $(d_i,y)$, indiquant le nombre de déflexions que l'objet sera susceptible de subir, s'il emprunte la sortie y pour aller de x à $d_i$.

L'emploi de la sortie $y_i(\tilde{\psi})$, sortie effectivement empruntée par l'objet $P_i(s_i,d_i)$, est capital. En effet, c'est grâce à lui que la connaissance des chemins effectivement parcourus par les objets, pourra être propagée à travers le réseau.

Le procédé de mise à jour, selon le mode « désapprentissage » consiste, à chaque itération, à mettre à jour systématiquement la table des valeurs Q, indépendamment de l'apprentissage dû au trafic, au moyen de la formule de mise à jour :

$$Q_x(d_i,y) := \gamma.Q_x(d_i,y) + (1 - \gamma) .Q_x^{t=0} (d_i,y$$

avec $\gamma \in [0,1]$. Dans cette formule, le désapprentissage par le facteur d'oubli est appliqué, pour chaque affectation d'un objet $P_i$ se trouvant en x, allant de $d_i$ et étant routé sur le moteur $y_i$ par la procédure de routage, sur les trois routeurs voisins de x différents de y. L'objectif est de revenir lentement vers les valeurs initiales du plus court chemin, en l'absence de trafic, afin d'améliorer l'adaptation du réseau lors d'un passage d'une phase de fort trafic à une phase de faible trafic. Le phénomène d'hystérésis est ainsi atténué et il est possible de réaliser le routage d'objets dans un trafic non-stationnaire.

Les valeurs $Q_x(d_i,y)$ sont ainsi modifiées à chaque itération de deux façons possibles.

La première façon correspond à l'apprentissage et est associée à un éventuel retour d'informations en provenance des voisins.

La seconde façon est associée à un désapprentissage, c'est-à-dire à un oubli partiel des anciennes valeurs ; elle concerne, pour le couple $(x,d_i)$, les sorties y, autres que celles de laquelle provient l'accusé de réception reçu. En l'absence de message de retour en provenance des voisins, les valeurs Q convergent géométriquement vers leur valeur de référence. Il y a donc une concurrence entre la dynamique d'apprentissage des tables de valeurs et la dynamique doublée. La vitesse d'oubli est réglée par le paramètre $\gamma$. Le choix de $\gamma$ est important ; en effet, s'il est trop faible, l'algorithme oublie plus vite qu'il n'apprend et altère alors les performances du Q-routing : s'il est trop grand, le procédé peut être mal adapté à la sporadicité du trafic.

Ainsi, le procédé de l'invention permet de router des objets dans un réseau de routeurs, dans lequel la priorité est donnée aux objets déjà présents dans le réseau. En outre, il permet une adaptation aux conditions de trafic non stationnaire. Le routage, utilisé dans ce procédé, s'adapte automatiquement à la charge du réseau, chaque routeur estimant l'encombrement du réseau, ce qui évite d'envoyer les objets dans des zones du réseau, qui sont encombrées.

**Revendications**

1.  Procédé de routage adaptatif d'objets dans un réseau comportant une pluralité de routeurs (1) reliés entre eux par des liens (2), chaque routeur comportant :

    -   M liens entrants (2a) et M liens sortants (2b) ;
    -   une file d'attente interne (3) ;
    -   une file d'attente externe (4) ;
    -   un buffer de routage de taille M (5) ; et
    -   un module de traitement (6),

    chaque routeur étant associé à une table de routage comportant des valeurs relatives à l'estimation du nombre de déflexions subies par chaque objet au départ de ce routeur, pour une destination donnée,
    ledit procédé comprenant une première étape (E1) d'initialisation de la table de valeurs associée à chaque routeur, puis une étape de traitement récurrent de chaque lien du réseau consistant à :

    a) détecter si au moins un objet est arrivé sur au moins un routeur (E2) ;
    b) considérer chaque lien du réseau et regarder s'il y a au moins un objet sur ces liens (E3) ;

    -   si oui, déplacer les objets le long des liens d'une unité de temps ;
    -   si non, attendre une unité de temps ;

    c) considérer chaque routeur du réseau et pour chacun détecter l'état de ses liens entrants (E4) ;

    -   si la présence d'un objet est détectée sur un lien entrant et que la destination de cet objet est le routeur considéré, alors ledit objet étant arrivé à destination, il est sorti du réseau ;
    -   si aucun objet à destination de ce routeur n'est détecté sur les liens entrants, alors vérifier l'état de la file d'attente interne :

        .   si la file d'attente interne contient des objets, alors transférer ces objets dans le buffer de routage du routeur (E4b1) ;
        .   si ledit buffer n'est pas plein, alors vérifier si des objets sont en attente dans la file d'attente externe (E4b4) et remplir le buffer avec une partie au moins des objets en attente dans cette file d'attente externe (E4b3),

    **caractérisé en ce qu'**il consiste à :
    d) affecter le contenu du buffer de routage sur les liens sortants du routeur en fonction de la table de routage associée et estimer dynamiquement le nombre de déflexions que les objets subiront en aval du routeur pour atteindre leur destination (E4c) ;
    e) mettre à jour les valeurs de la table de routage associée pour estimer le nombre de déflexions subies, sur tout le trajet, par les objets (E4d5, E4d4).

2.  Procédé selon la revendication 1, **caractérisé en ce que**, à l'arrivée d'un objet, chaque routeur envoie au routeur précédent, un accusé de réception indiquant le nombre estimé de déflexions subies par l'objet pour aller jusqu'au routeur de destination.

3.  Procédé selon la revendication 1 ou 2, **caractérisé en ce que** les étapes c) à e) sont effectuées successivement pour chaque routeur.

**4.** Procédé selon la revendication 1 ou 2, **caractérisé en ce que** les étapes c) à e) sont effectuées pour chaque routeur, simultanément.

**5.** Procédé selon l'une quelconque des revendications 1 à 4, **caractérisé en ce que** l'étape c) consiste à prendre en compte les informations contenues dans les accusés de réception envoyés par tous les routeurs voisins pour la mise à jour des tables de routage.

FIG. 1

FIG. 2

FIG. 3A

FIG. 3B

Office européen **RAPPORT DE RECHERCHE EUROPEENNE**
des brevets

Numéro de la demande

EP 01 40 3317

## DOCUMENTS CONSIDERES COMME PERTINENTS

| Catégorie | Citation du document avec indication, en cas de besoin, des parties pertinentes | Revendication concernée | CLASSEMENT DE LA DEMANDE (int.Cl.7) |
|---|---|---|---|
| A | MIR-FAKHRAEI N: "Evaluation of an ATM LAN constructed with a cyclic deflection-routing network" COMPUTER COMMUNICATIONS, ELSEVIER SCIENCE PUBLISHERS BV, AMSTERDAM, NL, vol. 21, no. 7, 15 juin 1998 (1998-06-15), pages 662-669, XP004132234 ISSN: 0140-3664 * abrégé * * page 663, alinéa 2; figure 2 * | 1-5 | H04L12/56 |
| A | CHOUDHURY A K ET AL: "EFFECT OF CONTENTION RESOLUTION RULES ON THE PERFORMANCE OF DEFLECTION ROUTING" COUNTDOWN TO THE NEW MILENNIUM. PHOENIX, DEC. 2 - 5, 1991, PROCEEDINGS OF THE GLOBAL TELECOMMUNICATIONS CONFERENCE. (GLOBECOM), NEW YORK, IEEE, US, vol. 3, 2 décembre 1991 (1991-12-02), pages 1706-1711, XP000313692 ISBN: 0-87942-697-7 * abrégé * * page 1708, "Theorem 2" - "Theorem 3" * | 1-5 | DOMAINES TECHNIQUES RECHERCHES (Int.Cl.7) H04L |

Le présent rapport a été établi pour toutes les revendications

| Lieu de la recherche | Date d'achèvement de la recherche | Examinateur |
|---|---|---|
| LA HAYE | 4 juillet 2002 | Hardelin, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)